# EUROPEAN PATENT APPLICATION

(11) **EP 1 747 812 A1**
(43) Date of publication of application: **31.01.2007**
(21) Application number: 06015781.5
(22) Date of filing: 28.07.2006
(51) Int. Cl.: B01J 19/00, B01L 3/00

(54) **Microreactor**

(30) Priority: 29.07.2005 JP 2005222052
(71) Applicant: Sumitomo Electric Industries, Ltd., Osaka (JP)
(72) Inventor: Katayama, Makoto Yokohama Works of Sumitomo, Yokohama-shi Kanagawa (JP); Utsumi, Yuichi, Himeji-shi Hyogo (JP); Masahiro, Takeo, Himeji-shi Hyogo (JP); Negoro, Seiji, Sakai-shi Osaka (JP)
(74) Representative: HOFFMANN EITLE

(57) **Abstract**

A micro reactor includes a filter 2 having a plurality of fine pores; a plurality of compartments 3a and 3b formed by the filter; and an element which enables a material passing through the fine pores to be transferred between the compartments, wherein the element which enables the material to be transferred between the compartments 3a and 3b can change surface tension of the material. In addition, volume of the material contained in the compartments 3a and 3b may change. In addition, the change in the surface tension of the material is carried out by selectively irradiating or not-irradiating light onto the surface thereof by using the filter 2 having a titan oxide surface. In addition, the change in the volume of the material contained in the compartments 3a and 3b is carried out by using light, heat, electricity, or magnetism.

## Description

### TECHNICAL FIELD

The present disclosure relates to a micro reactor. More particularly, the present disclosure relates to a micro reactor which allows a mix and/or reaction of a sample and/or reagent for a test and/or reaction to be sufficiently carried out so that the sample and/or reagent can be less in quantity for the test and/or reaction, resulting in cost reduction.

### RELATED ART

Recently, for the purpose of rapid research and development on various aspects, labor saving, resource saving, energy saving, space saving, and further, reduction in experimental waste liquid and a waste material, rationalization of repeated experiments, etc, there is an integrated chemical laboratory, so-called a microchip, or a micro TAS in which a chemical experiment, reaction, detection, and analysis can be carried out in a tiny space in the range of micrometer.

For example, Patent Document 1 (Japanese Unexamined Patent Application Publication No. 2002-326963) discloses a flat microchip flow path for controlling a liquid-liquid interfacial reaction.

Moreover, Patent Document 2 (Japanese Unexamined Patent Application Publication No. 2001-158000) discloses a biochemical IC in which a plurality of microchips each performing a single function are constructed, and chips performing different functions are selected therefrom to be combined so as to construct a desired three-dimensional chemical reaction path.

However, in the microchip disclosed in Patent Document 1, a flat flow path is required for every step of unit operations for reaction detection. Further, it is difficult for an analysis device using the microchip to perform high integration more than a specific degree. Furthermore, since the microchip has a flow path arranged on a flat surface, it is also difficult to expect that more than a specific degree is achieved in terms of enhancing detection sensitivity and speed.

In addition, in the biochemical IC disclosed in Patent Document 2, one reaction system has a height of 6mm, and a width of 5mm, and thus, it is hard to be applied to an environmental analysis requiring a micro analysis that performs analysis up to a micro liter level.

In the microchip disclosed in Documents 1 and 2, a mix and/or reaction of a liquid sample and/or reagent uses a flow path having a tiny diameter in the range of micrometer. When the mix and/or reaction is performed sufficiently, the length of the flow path needs to be significantly longer than its diameter. In order to ensure such a long flow path, even if the flow path detours, the size of the microchip has to be in the range of centimeter. Thus, there has been a need for a further minimization. In addition, in order for fluid to be flown through the flow path having the significantly long length with respect to the tiny diameter in the range of micrometer, an extremely high pressure, for example, 100atm, has to be applied, resulting in large pressure loss.

### SUMMARY

Embodiments of the present invention provide a micro reactor which allows a mix and/or reaction of a sample and/or reagent for a test and/or reaction to be sufficiently carried out so that the sample and/or reagent can be less in quantity for the test and/or reaction, resulting in cost reduction due to reduction of a test time.

In order to solve the aforementioned technical problems of Patent Documents 1 and 2, the inventors have invented a micro reactor including a plurality of fine pores, each of which has a specific size, and a filter capable of sieving or separating molecules in liquid, wherein the filter forms a plurality of reaction layers by dividing the inside of a cylindrical tank in an axial direction. In the micro reactor, since the fine pores of the filter are tiny, molecules can more frequently collide with one another due to molecule diffusion when liquid passes through the fine pores. Moreover, since the fine pores are present in plural, a time for the mix and/or reaction of the sample and/or reagent can be consequently significantly shorter than that of the related-art case. Further, the flow path can be shortened, and thus, downsizing is further achievable. Furthermore, the sample and/or reagent can be less in quantity for the test and/or reaction, resulting less cost. In addition, comparing with the related-art flow path type microchip, pressure loss is reduced in the presence of the plurality of fine pores.

However, the aforementioned micro reactor passes the sample and/or reagent for the test and/or reaction through the fine pores of the filter so that the sample and/or reagent can be transferred from one reaction layer to another reaction layer. In this case, the sample and/or reagent is needed more in quantity because the mix and/or reaction of the sample and/or reagent for the test and/or reaction is not sufficiently performed, or because a long processing time is required for the test and/or reaction to be carried out sufficiently.

The inventors have made a close study to figure out the following technical features.
(1) A micro reactor comprising: a filter having a plurality of fine pores; a plurality of compartments divided by the filter; and an element which enables a liquid material passing through the fine pores to be transferred between the compartments.
(2) The micro reactor of (1), wherein the element which enables the liquid material to be transferred between the compartments includes an element which changes surface tension of the liquid material at a contact surface between the filter and the liquid material.
(3) The micro reactor of (2), wherein the element which changes the surface tension of the liquid material includes a titan oxide layer formed on the contact surface between the filter and the liquid material and an element which irradiates light onto the titan oxide layer.
(4) The micro reactor of any one of (1) to (3), wherein the element which enables the liquid material to be transferred between the compartments includes an element which generates pressure difference between the adjacent compartments divided by the filter.
(5) The micro reactor of (4), wherein the element which generates the pressure difference includes an element which changes volume inside the compartment.
(6) The micro reactor of (5), wherein the element which changes volume inside the compartment includes a member disposed inside the compartment, volume of the member being changed according to light, heat, electric energy, or magnetic energy applied thereto.

Various implementations may include one or more the following advantages. For example, the micro reactor of the invention has an element which enables a material passing through a plurality of fine pores to be transferred between a plurality of compartments divided by a filter having the fine pores. Thus, a sample and/or reagent for a test and/or reaction can pass through the fine pores and be transferred to and from between the compartments. In addition, since a reaction function and a mixing function are excellent, agitation, mixing, reaction by the filter, and a suction-bonding effect of a material to be tested with respect to the filter can be further improved. As a result, the sample and/or reagent can be less in quantity for the test and/or reaction, and a test time can be reduced, resulting in cost reduction.

### BRIEF DESCRIPTION OF THE DRAWINGS

Fig. 1 shows a micro reactor according to an embodiment of the present invention;
Fig. 2 shows a liquid transfer in the micro reactor of Fig. 1; and
Fig. 3 shows a micro reactor according to another embodiment of the present invention.

### DETAILED DESCRIPTION

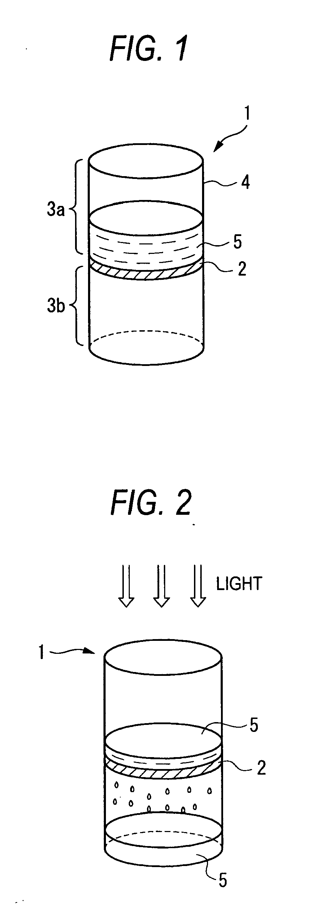

A micro reactor of the invention includes a filter having a plurality of fine pores, a plurality of compartments which are divided by the filter, and an element which enables a liquid material passing through the fine pores to be transferred between the compartments. A specific example thereof is shown in Fig. 1.

The micro reactor 1 of Fig. 1 includes a cylindrical tank 4, and at least one filter 2 which forms a plurality of compartments (reaction tanks) by dividing the inside of the tank 4 in an axial direction.

The filter used in the micro reactor of the invention includes the plurality of fine pores and divides the micro reactor into the plurality of compartments. If the micro reactor of the invention is installed in a vertical direction, by selecting the size of the fine pores according to surface tension of the liquid at a contact surface of the filter and liquid, the filter used in the micro reactor can control (restrict) the quantity of liquid that passes through the fine pores even if the liquid exists on the upper surface of the filter. Moreover, although the liquid exists on the upper surface of the filter, the filter can prevent the liquid from passing through the fine pores unless a predetermined force (e.g. pressure, etc) is applied. The filter will be described -below in detail.

The element used in the micro reactor of the invention as a means or mechanism which enables the liquid material to be transferred between the compartments may change the surface tension of the liquid material at the contact surface between the filter and the liquid material.

For example, the element may have a structure in which a photo-catalyst such as titanium oxide is applied to the surface of the filter or the inside of the fine pores by coating, etc.

In this case, as shown in Fig. 1, if the micro reactor 1 is vertically disposed, and the liquid 5 is injected into the upper compartment 3a, then the liquid 5 stays in the upper compartment 3a. This is because, in the filter 5 that has a surface of the photo-catalyst such as titan oxide, the surface tension of the liquid 5 is high at the contact surface between the liquid 5 and the filter 2. However, as shown in Fig. 2, when light is irradiated onto the filter 2, the condition of the surface of the filter 2 changes, and thus the surface tension of the liquid 5 decreases. Hence, the liquid 5 stayed in the upper compartment 3a enters into the filter 2 due to the weight of the liquid 5, and is then transferred to the lower compartment 3b. Accordingly, when quantity or time of light irradiation onto the photo-catalyst surface formed on the upper surface of the filter is appropriately modified, the quantity of liquid entering into the filter 2 and transferred to the lower compartment 3b can be controlled (restricted). Further, when the micro reactor 1 is inverted upside down after the liquid 5 is transferred to the lower compartment 3b, and the light irradiation is repeated, then the liquid 5 can be transferred between the compartments 3a and 3b divided by the filter 2 in multiple times. That is, a bubble function for transferring the liquid between the compartments divided by the filter can be achieved. In addition, time and direction for the liquid 5 to pass through the filter can be controlled by changing quantity or time of light irradiation onto the upper and lower surfaces of the filter 2.

Further, a structure in which pressure difference occurs between the adjacent compartments with the filter being interposed therebetween may be used.

For example, a photo-thermal conversion material is applied to an inner wall of the micro reactor of the invention by coating, etc. As shown in Fig. 1, the micro reactor 1 is vertically disposed, and the liquid 5 is injected into the upper compartment 3a. Thereafter, as shown in Fig. 2, light is irradiated onto the upper compartment 3a in a selective manner in a state that the liquid which has a high surface tension 5 stays in the upper compartment 3a by the filter. Accordingly, the photo-thermal conversion material reacts so that temperature of the upper compartment 3a increases. As a result, volume of a material contained in the compartment 3a is expanded and increased, -and the pressure inside the compartment 3a rises. Thus, the liquid 5 stayed in the compartment 3a enters into the filter 2 to be transferred to the lower compartment 3b. Thereafter, light is irradiated onto the lower compartment 3b in a selective manner. Accordingly, the photo-thermal conversion material reacts so that temperature of the lower compartment 3b increases. As a result, volume of a material contained in the compartment 3b is expanded and increased, and the pressure inside the compartment 3b rises. Thus, the liquid 5 stayed in the compartment 3b enters into the filter 2 to be transferred to the upper compartment 3a. By repeating the above process, the liquid 5 can be transferred between the compartments 3a and 3b in multiple times.

In order to generate pressure difference between the compartments, volume of liquid that is a sample and/or reagent for a test and/or reaction may be expanded and increased. Alternatively, volume of an ambient gas such as air existing in the compartment along with the liquid may be expanded and increased, or on the contrary, the volume of the ambient gas such as air existing in the compartment in which the liquid has to be transferred may be shrank or reduced.

Furthermore, a structure in which volume inside the compartments can be changed may be used as a structure which generates pressure difference between the adjacent compartments. For example, the inner wall of the compartment of the micro reactor -of the invention is provided with a piezoelectric element. As shown in Fig. 1, the micro reactor 1 is vertically disposed, and the liquid 5 is injected into the upper compartment 3a. Thereafter, the piezoelectric element provided in the upper compartment 3a is turned on in a state that the liquid 5 which has a high surface tension stays in the upper compartment 3a by the filter. Hence, according to an effect of the piezoelectric element, pressure increases in the compartment 3a, and thus the liquid 5 stayed in the compartment 3a enters into the filter 2 so as to be transferred to the lower compartment 3b. Subsequently, the piezoelectric element provided in the lower compartment 3b is turned on. Accordingly, according to an effect of the piezoelectric element, pressure increases in the compartment 3b, and thus the liquid 5 stayed in the compartment 3b enters into the filter 2 so as to be transferred to the upper compartment 3a. By repeating the above process, the liquid 5 can be transferred between the compartments 3a and 3b in multiple times.

The same effect as that of described above may be obtained by forming a separate heating element in each compartment without the photo-thermal conversion material in the inner wall of the micro reactor, or by installing a member having a large thermal expansion coefficient in the inner wall of the compartment.

Obtaining the same effect as that of described above by using a structure, in which the volume inside the compartment can be changed in the aforementioned manner and can be implemented by those skilled in the art using electricity or magnetism, is within the scope of the invention. Moreover, as for the structure in which pressure difference occurs between the compartments, an external compression (decompression) element such as a pump that is formed in association with each of the compartment may be used together.

Now, a micro reactor according to an embodiment of the present invention will be described in detail.

First, a filter used in the micro reactor of the invention (hereinafter simply referred to as a filter of the invention) will be described in detail.

As described above, the filter of the invention used in the micro reactor includes the plurality of fine pores and forms the plurality of compartments of the micro reactor. Further, if the micro reactor is installed in a vertical direction, the filter can control (restrict) the quantity of liquid that passes through the fine pores even if the liquid exists on the upper surface of the filter. Moreover, although the liquid exists on the upper surface of the filter, the filter can prevent the liquid from passing through the fine pores unless a predetermined force (e.g. pressure, etc) is applied. In addition, the filter is used to sieve or separate molecules in the liquid.

It is- desirable that the filter meets the relation of 0.001µm ≤ Dₐµm ≤ 100µm where the diameter of the fine pore is Dₐµm. In addition, it is desirable that the diameter Dₐ of the fine pore is less than the length of the fine pore.

If a diffusion velocity of a molecule in the liquid under the process of sieving or separation for the filter is Vm µm/sec, and a time for the liquid to pass through the filter is Tf sec, it is desirable that the filter meets the relation of Dₐ ≤ Tf·Vm.

According to the above structure, molecules can more frequently collide with one another due to molecule diffusion. As a result, for example, if a liquid reagent is used, a reaction time of the reagent can be significantly reduced in comparison with others cases.

In the filter of the invention, the plurality of fine pores may be parallelized in a honeycomb shape. In this case, if a side of the fine pore is D_{b} µm, it is desirable that the filter meets the relation of 0.0005µm ≤ D_{b}µm ≤ 50µm. In addition, it is desirable that the side D_{b} of the fine pore is less than the length of the fine pore.

In this case, if the diffusion velocity of the molecule in the liquid under the process of sieving or separation is Vm µm/sec, and the time for the liquid to pass through the filter is Tf sec, it is desirable that the filter meets the relation of 2D_{b} ≤ Tf · Vm.

According to the above structure, molecules can more frequently collide with--one another due to molecule diffusion. As a result, for example, if a liquid reagent is used, a reaction time of the reagent can be significantly reduced in comparison with others cases.

It is desirable that the filter of the invention is composed of a laminated body which is laminated with an insulation material, a metal that has undergone a LIGA (Lithographite Galvanoformung and Abformung) process using an X-ray lithography method, and an insulation material, in this order. In addition, the laminated body may be laminated with an insulation material, a heater wire, and an insulation material, in this order. In addition, the laminated body may be laminated with an insulation material, a metal processed in the X-ray lithography method, an insulation material, a metal processed in the X-ray lithography method, and an insulation material, in this order. In addition, the laminated body may be laminated with an insulation material, a metal processed in the X-ray lithography method, a heater layer in which the heater wire is inserted into an insulator, a metal processed in the X-ray lithography method, and an insulation material, in this order.

Since the laminated body is laminated with an insulation material, a metal, and an insulation material, it is possible to apply voltage only to the metal in the middle of the laminated body, and thus the metal can function as an electrode. Moreover, in the case where an electrolyte fluid exists in the upper portion of the filter having two metal layers, if voltage is applied between the metal layers, only particular ion contained in the liquid can be transferred to the lower portion of the filter due to electrophoresis or electro-osmosis flow. In addition, if the filter has a heater function, it is possible to enable a chemical reaction to occur at a normal temperature or higher by heating a liquid flowing inside the filter.

In this case, the metal may be copper, aluminum, platinum, or gold.. The insulation material may be glass, polydimethylsiloxane, or acrylic resin that insulates electricity and heat. The heater wire may be formed of titan, gold, platinum, tungsten, or molybdenum.

The heater wire is wired so as not to overlap a hole. Alternatively, the heater wire that is led from an external power source may be inserted into the insulator. Instead of the heater wire, a hollow pipe may be used so that a heat transfer medium flows therein, thereby enabling heating and cooling.

A mesoporous material such as a silica porous material may be used as the filter of the invention. The mesoporous material may include a heater that heats the mesophorous material. For example, in the heater, a thin film of a heating material having a high resistance such as tungsten is deposited on the upper surface of the filter of the mesoporous material by using a plating method or a CVD method, and current is controlled to turn on the filter so as to reach a predetermined temperature. A thin film in which gold, platinum, and titan are thickly deposited may be patterned by using an UV photo process to be used as a heater pattern.

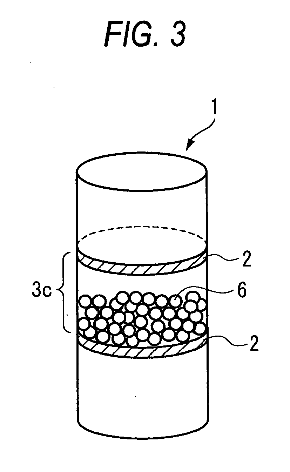

As shown in Figs. 1 and 2, in the micro reactor of the invention, the inside of the cylindrical tank 4 is divided into the two compartments (reactor tanks) 3a and 3b in an axial direction by using only one filter 2. However, three compartments (reaction tanks) may be formed by using two or more filters 2. Fig. 3 shows an example of a micro reactor 1 in which three compartments (reaction tanks) are formed by using two filters 2.

In this case, in a compartment (a second reaction tank) 3c in the middle of the two filters 2, a plurality of particles 6 of which surfaces are fixed with a specific antibody or enzyme are enclosed. Due to the particles 6 of which surfaces are fixed with the specific antibody of enzyme, effectiveness and selectivity of a biochemical reaction can be improved.

Examples of the antibody fixed on the surface of the particle include an antibody against an endocrine disruptor such as alkylphenol, alkylphenol ethoxylate, bisphenol A, estradiol, or organic tin, an antibody against an environmental pollutant such as PCB, or dioxin, an antibody against a tumor marker such as CEA, or AFP, an antibody against an antivirus such as HBV, HCV, or HIV, an antibody against a disease specific marker for a clinical test, an antibacterial antibody (an antibody against helicobacter pylori, legionella, etc), and an antibody against various novel bio-materials which have been clarified by a post-genome analysis. The particle on which an antibody is fixed may be a polystyrene latex particle or a gelatin particle.

Examples of the enzyme fixed on the surface of the particle include an enzyme related to useful material production (production of an amide compound such as amino acid, nucleotide, or acrylamide, a steroid, a phenol compound, an alkaloid, a pigment, a grease, a monoclonal antibody, etc), an enzyme related to medical supplies (production of a bio-active material such as an antibody material, a hormone system, an anti-cancer medicine, interleukin, erythropoietin, L-DOPA, vitamin, etc), an enzyme related to a variety of analyses (a clinical analysis, an environmental analysis, etc), an enzyme related to environmental preservation (analyses of phenol, cyanogen, endocrine disruptors, etc), and an enzyme related to energy generation (generation of alcohol, methane, hydrogen, etc). The particle which is fixed with enzyme may be a carrier having an ion exchanger which is represented by a polysaccharide derivative such as p-aminobenzylcellulose, a polyacrylicamid derivative, a porous glass aminosilane derivative, a DEAE-cellulose, a TEAE-cellulose, a DEAE-sephadex, a CM-sephadex, and a DEAE-sepharose.

Now, a manufacturing method of the body (the tank 4 and the filters 2) of the micro reactor 1 of the invention will be described. When the body of the micro reactor 1 is manufactured, the tank 4 and the filter 2 are independently manufactured. When the cylindrical tank 4 is manufactured, it is divided into the compartments (reaction tanks) 3a, 3b, and 3c to be manufactured. In this case, each of the compartments (reaction tanks) 3a, 3b, and 3c and the filters 2 are manufactured by precision mechanical processing, electromagnetic wave processing using an X-ray, an UV-ray, or an electromagnetic ray, or mold processing. By utilizing the above manufactured elements, the compartments 3a, 3b, and 3c are bonded by the use of a thermosetting resin or a photo-curable resin so that the filters 2 can be interposed therebetween, or by activating the metal surface. As a result, atom with a dangling bond on the metal surface is exposed from the surface, and thus surface activation bonding, through which atoms constituting each tank have to be attached to the atom with the dangling bond, is carried out, thereby completing the micro reactor 1. The thermosetting resin may be a phenol resin, an acrylic resin, an epoxy resin, a melamine resin, a silicon resin, or an acrylic-modified silicon resin. The UV curable resin may be an epoxy acrylate resin, a polyester acrylate resin, or a methacrylate modification thereof. As long as it is curable, any one of thermosetting, UV-curing, and electron beam curing is appropriate.

The present invention is expected to be applied in producing a useful material such as amino acid or an antibody, a food industry, -or in a variety of sectors such as a medicine, a medical supply, an analysis, separating/refining, environmental preservation, and energy generation.

## Claims

1. A micro reactor comprising:
a filter having a plurality of fine pores;
a plurality of compartments divided by the filter; and
an element which enables a liquid material passing through the fine pores to be transferred between the compartments.

2. The micro reactor of claim 1, wherein the element which enables the liquid material to be transferred between the compartments includes an element which changes surface tension of the liquid material at a contact surface between the filter and the liquid material.

3. The micro reactor of claim 2, wherein the element which changes the surface tension of the liquid material includes a titan oxide layer formed on the contact surface between the filter and the liquid material and an element which irradiates light onto the titan oxide layer.

4. The micro reactor of any one of claims 1 to 3, wherein the element which enables the liquid material to be transferred between the compartments includes an element which generates pressure difference between the adjacent compartments divided by the filter.

5. The micro reactor of claim 4, wherein the element which generates the pressure difference includes an element which changes volume inside the compartment.

6. The micro reactor of claim 5, wherein the element which changes volume inside the compartment includes a member disposed inside the compartment, volume of the member being changed according to light, heat, electric energy, or magnetic energy applied thereto.
